# EUROPÄISCHE PATENTANMELDUNG

(11) **EP 0 900 518 A2**
(43) Veröffentlichungstag der Anmeldung: **10.03.1999**
(21) Anmeldenummer: 98116831.3
(22) Anmeldetag: 04.09.1998
(51) Int. Cl.: A01D 44/00

(54) **Verfahren zur schonenden Isolierung von auf Wasser treibenden Wasserpflanzen**

(30) Priorität: 05.09.1997 DE 19738995
(71) Anmelder: BASF AKTIENGESELLSCHAFT, 67056 Ludwigshafen (DE)
(72) Erfinder: de Kramer, Jacobus Jan, Dr., 67691 Hochspeyer (DE); Retzlaff, Günter, Dr., 67354 Römerberg (DE)
(74) Vertreter: Kinzebach, Werner, Dr.

(57) **Zusammenfassung**

Die Erfindung betrifft ein Verfahren zur schonenden Isolierung von auf dem Wasser treibenden Wasserpflanzen aus Teichen, Becken oder Behältern. Das erfindungsgemäße Verfahren ist dadurch gekennzeichnet, daß man
a) eine auf den Entnahmeort gerichtete Strömung an der Wasseroberfläche in dem Teich, Becken oder Behälter erzeugt, die die Wasserpflanzen zu dem Entnahmeort treibt,
b) die Wasserpflanzen mittels eines hydrophilen festen oder flüssigen Mediums am Entnahmeort einzeln aus dem Teich, Becken oder Behälter entnimmt, und
c) die Wasserpflanzen einzeln in Behälter überführt.

## Beschreibung

Die Erfindung betrifft ein Verfahren zur schonenden Isolierung von auf dem Wasser treibenden Wasserpflanzen aus Teichen, Becken oder Behältern.

Auf dem Wasser treibende Wasserpflanzen (Schwimmpflanzen), beispielsweise Lemna-Arten, Azolla-Arten und Salvinia-Arten treiben mit ihren Blättern auf der Wasseroberfläche, während ihre von Art zu Art unterschiedlich ausgebildeten Wurzeln in das Wasser hineinragen. In Teichen, Vorrats- bzw. Anzuchtbecken können diese Pflanzen dichte Teppiche aus vielen tausend Individuen bilden. Schwimmpflanzen sind als Testsysteme für Untersuchungen auf dem Gebiet des Pflanzenschutzes und der Pflanzengenetik von großer Bedeutung, da sie auf engem Raum in großer Zahl kultiviert werden können, in einem stofflich leicht kontrollierbaren und manipulierbaren Medium (Wasser) leben und darüber hinaus durch ihre Symbiose mit Cyanobakterien-Species, wie Nostoc und Anabaena, beispielsweise in den Blättchen von Azolla-Arten, eine gegebenenfalls gentechnisch nutzbar zu machende Methode zur Stickstoffspeicherung entwickelt haben.

Für Versuchszwecke ist es notwendig, die Einzelpflanzen in Testbehälter zu überführen, was bislang manuell erfolgt und mit er-heblichem personellen und somit auch finanziellem Aufwand verbunden ist.

Aus der DE-A-44 25 522 ist bekannt, fließfähige Schüttgüter, beispielsweise Weizen, mit Hilfe eines Band-Zellenauslesers zu separieren und dadurch einen erhöhten Massendurchsatz, verglichen mit zylindrischen Sortier- und Reinigüngsvorrichtungen, zu erzielen.

Aus der GB-B-2 184 033 ist ein Gerät bekannt, das durch Einsatz eines profilierten Förderbandes eine verbesserte Automatisierbarkeit bei der Flüssig-chromatographischen Untersuchung kleiner Testvolumina erlaubt.

Die verwendeten Förderbänder sind weder hydrophil noch wird ihre Verwendung zur Isolierung von Schwimmpflanzen erwähnt.

Der vorliegenden Erfindung liegt die Aufgabe zugrunde, die Isolierung und Vereinzelung von schwimmenden Wasserpflanzen zu mechanisieren und/oder zu automatisieren.

Überraschenderweise wurde gefunden, daß Wasserpflanzen stärker an nassen Oberflächen als aneinander haften. Außerdem wurde überraschenderweise gefunden, daß Wasserpflanzen durch Saugkräfte oder durch Wasserstrahlen von bestimmter Stärke voneinander getrennt werden können.

Gegenstand der vorliegenden Erfindung ist somit ein Verfahren zur schonenden Isolierung von auf dem Wasser treibenden Wasserpflanzen aus Teichen, Becken oder Behältern, das dadurch gekennzeichnet ist, daß man
a) eine auf den Entnahmeort gerichtete Strömung an der Wasseroberfläche in dem Teich, Becken oder Behälter erzeugt, die die Wasserpflanzen zu dem Entnahmeort treibt,
b) die Wasserpflanzen mittels eines hydrophilen festen oder flüssigen Mediums am Entnahmeort einzeln aus dem Teich, Becken oder Behälter entnimmt, und
c) die Wasserpflanzen einzeln in Behälter überführt.

In einer bevorzugten Ausführungsform des erfindungsgemäßen Verfahrens wird die in a) beschriebene gerichtete Strömung erzeugt, indem man einen oder mehrere hydrophile Festkörper in das Wasser eintaucht und in Richtung des Entnahmeortes mit einer Geschwindigkeit aus dem Wasser herausbewegt, bei der der die Oberfläche des hydrophilen Festkörpers benetzende Wasserfilm möglichst lange erhalten bleibt.

Als hydrophile Festkörper gelten im Rahmen der vorliegenden Erfindung solche Festkörper, die durch Wasser benetzbar sind.

Erfindungsgemäß besonders geeignete hydrophile Festkörper sind beispielsweise Fäden, Bänder, Stäbe oder Stangen, insbesondere Endlosschlaufen oder rotierende Scheiben aus gut benetzbaren Materialien, insbesondere Endlosschlaufen aus hydrophilen oder Oberflächen-hydrophilisierten Elastomeren. Erfindungsgemäß verwendbare hydrophile oder Oberflächen-hydrophilisierte Elastomere sind beispielsweise durch strahleninduzierte Pfropfung von Acrylsäure modifizierter Ethylen-Propylen-Kautschuk (EPR) (bekannt aus Soebianto, Y.S. et al., Angew. Makromol. Chem. (1987) 152, S. 149 - 158), hydrophile Polyvinylsiloxane (bekannt aus Bader, F. und Setz, J., Dent. Lab. (1992) 40/3, S. 421 - 423), durch Oxidation mit Chromsäurelösungen oder durch Heißpressen zwischen Teflonplatten oberflächenbehandeltes Polyethylen oder Polymethylmethacrylat (bekannt aus Wang, R.-H. und Stoffer, J.O., Polym. Mater. Sci. Eng. (1992) 67, S. 123 - 124), durch Behandlung mit Stickoxidplasma oberflächenmodifiziertes Polyethylen (bekannt aus Inagaki, N. et al., Appl. Polym Symp. (1990) 46, S. 399 - 413), hydrophile Polyurethanharnstoffelastomere mit Ethylenoxid- und Tetramethylenoxid-Gruppen (bekannt aus Dror, M. und Stewart, M., Annu. Tech. Conf. Soc. Plast. Eng. (1990), S. 1132 - 1134), hydrophile Polyetherelastomere (bekannt aus Shih, J.S. und Tirrell, D.A., J. Polym. Sci., Polym. Chem. Ed. (1984) 22/3, S. 781 - 791), mittels Plasma-Pfropfpolymerisation von Glycidylmethacrylat hydrophilisiertes polypropylen (bekannt aus Inagaki, N. et al., Polym. Bull. (1991) 26/3, S. 283 - 289) und durch Einführung von Amid- oder Estergruppen oberflächenmodifizierte Polyethylene (bekannt aus Wilson, M.D. et al., J. Am. Chem. Soc. (1990) 112/3, S. 1244 - 1245). Weitere Verfahren zur Herstellung erfindungsgemäß geeigneter hydrophiler oder Oberflächen-hydrophilisierter Elastomere sind aus Kreiner, C.F., Fachvortrag WVAO-Jahreskongress (1985), S. 148 - 156, bekannt.

Wird ein solcher hydrophiler Festkörper aus dem Wasser gezogen, so bildet sich an seiner Oberfläche ein Wasserfilm. Gleichzeitig erzeugt dieser Vorgang an der Wasseroberfläche eine Strömung in Richtung auf den hydrophilen Festkörper. Durch diese Strömung werden auf der Wasseroberfläche treibende Gegenstände, z. B. Schwimmpflanzen, in Richtung des hydrophilen Festkörpers bewegt. Dies führt dazu, daß die Schwimmpflanzen schließlich mit dem hydrophilen Festkörper in Berührung kommen und aufgrund von Adhäsionskräften mit dem Wasserfilm am hydrophilen Festkörper haften, wenn dieser aus dem Wasser herausgezogen wird. Bedingung hierfür ist, daß die Geschwindigkeit, mit der man die Festkörper in das Wasser eintaucht und aus dem Wasser herauszieht, den auf dem Festkörper befindlichen Wasserfilm möglichst lange stabil erhält. Vorteilhafter Weise sollten die Festkörper daher nur langsam, vorzugweise mit einer Geschwindigkeit von 0,5 bis 500, insbesondere 5 bis 300 mm/s, besonders bevorzugt 10 bis 50 mm/s bewegt werden.

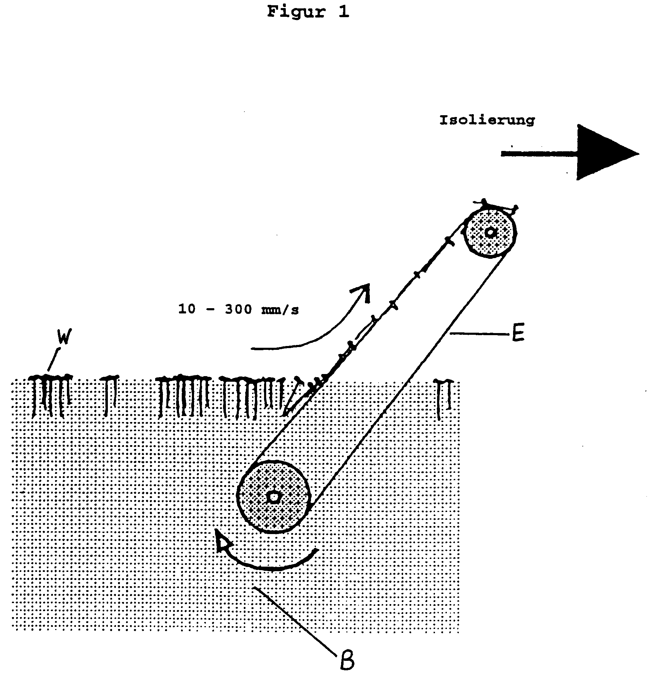

Der Einsatz von rotierenden Scheiben und insbesondere Endlosschlaufen aus hydrophilem Elastomer ist besonders bevorzugt, weil bei entsprechender Anordnung und Geschwindigkeit die Schwimmpflanzen kontinuierlich aus dem Wasser entnommen werden können. Eine solche Endlosschlaufe wird beispielsweise in Figur 1 dargestellt, in der W Wasserpflanzen, B ein Becken und E eine Endlosschlaufe bezeichnet.

Eine weitere bevorzugte Ausführungsform des erfindungsgemäßen Verfahrens besteht darin, daß man die in a) beschriebene gerichtete Strömung erzeugt, indem man aus einer oder mehreren unterhalb der Wasseroberfläche angeordneten Düsen Wasserstrahlen in Richtung des Entnahmeortes ausstößt. Der Durchmesser der Düsen und der Druck der durch sie sie erzeugten Wasserstrahlen kann in Abhängigkeit von Form, Größe und Masse der zu vereinzelnden Pflanzen in einem weiten Bereich variiert werden. Typischerweise beträgt der Düsendurchmesser etwa 0,05 bis 5 mm, insbesondere etwa 0,1 bis 2 mm. Der Austrittsdruck des aus der Düse strömenden Wasserstrahls liegt in der Regel bei etwa 0,5 bis 5 bar, insbesondere etwa 2 bis 3 bar.

Zweckmäßigerweise können die zur Erzeugung der Strömung verwendeten Düsen auch zur in b) beschriebenen Vereinzelung der Wasserpflanzen eingesetzt werden. Idealerweise sind die Düsen, die am Entnahmeort unterhalb der Wasseroberfläche angeordnet sind und die Wasserpflanzen einzeln aus dem Wasser befördern, in einem Winkel von etwa 45° zur Wasseroberfläche montiert. Düsendurchmesser und Wasserdruck sollten sein wie oben beschrieben. Der Wasserpegel sollte konstant gehalten werden, beispielsweise mittels eines Regelkreises.

Eine weitere bevorzugte Ausführungsform des erfindungsgemäßen Verfahrens besteht darin, daß man die in a) beschriebene gerichtete Strömung erzeugt, indem man am Entnahmeort unterhalb der Wasseroberfläche eine Saugvorrichtung plaziert und Wasser in Richtung des Entnahmeortes saugt. Die auf der Wasseroberfläche schwimmenden Pflanzen treiben dadurch auf den Entnahmeort zu. Zweckmäßigerweise können dann die Wasserpflanzen am Entnahmeort mittels der unterhalb der Wasseroberfläche plazierten Saugvorrichtung einzeln aus dem Wasser abgesaugt werden. Grundsätzlich kann dies auch parallel zur Wasseroberfläche oder direkt an der Wasseroberfläche erfolgen. Bei der Entnahme von der Wasseroberfläche stört jedoch die ebenfalls mit angesaugte Luft die Detektion der Pflanzen für die anschließend notwendige Separierung. Die Absaugung kann mit üblichen Pumpen, beispielsweise mit elektrisch betriebenen Saugpumpen, erfolgen. Voraussetzung für diese Vorgehensweise ist eine genaue Regulierung des Wasserstandes und der Absaugrate.

Grundsätzlich kann jeder der erfindungsgemäßen Verfahrensschritte zur Strömungserzeugung mit jedem erfindungsgemäßen Verfahrensschritt zur Entnahme der Wasserpflanzen kombiniert werden. Des geringeren apparativen Aufwandes wegen ist es jedoch im allgemeinen vorzuziehen, die Entnahme mit den gleichen Mitteln durchzuführen, mit denen die Strömung erzeugt wurde.

Die erfindungsgemäß entnommenen Wasserpflanzen können nun nach Detektion, z. B. durch eine Lichtschranke (kapazitives bzw. induktives Verfahren) und nachfolgende Überführung durch einen Luft- oder Wasserstrahl in Einzelbehälter isoliert werden.

Die folgenden Beispiele erläutern die Erfindung, ohne sie jedoch darauf einzuschränken:

### Beispiel 1

In einem 5-l-Glasgefäß mit 4 l Wasser werden ungefähr 100 LemnenPflanzen kultiviert. Mittels eines Elektromotors wird ein 2 mm breites erfindungsgemäßes Elastomerband mit einer Geschwindigkeit von 10 - 50 mm/s durch das Wasser gezogen. Auf diese Weise werden die Pflanzen auf dem Elastomerband einzeln aus dem Wasser entnommen und können mit einem Wasserstrahl einzeln in Behälter abgespült werden.

### Beispiel 2

In einem 5-l-Glasgefäß mit 4 l Wasser werden ungefähr 100 LemnenPflanzen kultiviert. Etwa 3 mm unterhalb der Wasseroberfläche ist unter einem Winkel von etwa 45° schräg nach oben eine Kanüle mit einer Austrittsöffnung von 0,2 mm Durchmesser montiert, die an eine Wasserleitung mit etwa 3 bar Druck angeschlossen ist. Die Lemnen bewegen sich in Richtung des Wasseraustritts und werden mit dem Wasserstrahl einzeln aus dem Glasgefäß befördert.

## Patentansprüche

1. Verfahren zur schonenden Isolierung von auf dem Wasser treibenden Wasserpflanzen aus Teichen, Becken oder Behältern, dadurch gekennzeichnet, daß man
a) eine auf den Entnahmeort gerichtete Strömung an der Wasseroberfläche in dem Teich, Becken oder Behälter erzeugt, die die Wasserpflanzen zu dem Entnahmeort treibt,
b) die Wasserpflanzen mittels eines hydrophilen festen oder flüssigen Mediums am Entnahmeort einzeln aus dem Teich, Becken oder Behälter entnimmt, und
c) die Wasserpflanzen einzeln in Behälter überführt.

2. Verfahren nach Anspruch 1, dadurch gekennzeichnet, daß man die gerichtete Strömung erzeugt, indem man einen oder mehrere hydrophile Festkörper ins Wasser eintaucht und in Richtung des Entnahmeortes mit einer Geschwindigkeit aus dem Wasser herausbewegt, bei der der die Oberfläche des hydrophilen Festkörpers benetzende Wasserfilm möglichst lange erhalten bleibt.

3. Verfahren nach Anspruch 1 oder 2, dadurch gekennzeichnet, daß man als hydrophile Festkörper Fäden, Bänder, Stäbe oder Stangen, insbesondere Endlosschlaufen oder rotierende Scheiben verwendet.

4. Verfahren nach einem der Ansprüche 1 bis 3, dadurch gekennzeichnet, daß man als hydrophilen Festkörper eine Endlosschlaufe aus hydrophilem oder Oberflächen-hydrophilisiertem Elastomer verwendet.

5. Verfahren nach einem der vorhergehenden Ansprüche, dadurch gekennzeichnet, dass das hydrophile oder Oberflächen-hydrophilisierte Elastomer ausgewählt ist unter durch strahleninduzierte Pfropfung von Acrylsäure modifiertem Ethylen-Propylen-Kautschuk, hydrophilem Polyvinylsiloxan, durch Oxidation mit Chromsäurelösung oder durch Heißpressen zwischen Teflonplatten oberflächenmodifiziertem Polyethylen oder Polymethylmethacrylat, mit Stickoxidplasma oberflächenmodifiziertem Polyethylen, hydrophilem Polyurethanharnstoffelastomer mit Ethylenoxid- und Tetramethylenoxid-Gruppen, hydrophilem Polyether-Elastomer oder durch Plasma-Pfropfpolmerisation von Glycidylmethacrylat hydrophilisiertem Polypropylen.

6. Verfahren nach Anspruch 1, dadurch gekennzeichnet, daß man die gerichtete Strömung erzeugt, indem man aus einer oder mehreren unterhalb der Wasseroberfläche angeordneten Düsen Wasserstrahlen in Richtung des Entnahmeortes ausstößt.

7. Verfahren nach Anspruch 1, dadurch gekennzeichnet, daß man die gerichtete Strömung erzeugt, indem man am Entnahmeort unterhalb der Wasseroberfläche eine Saugvorrichtung plaziert und Wasser in Richtung des Entnahmeortes saugt.

8. Verfahren nach einem der Ansprüche 1 bis 7, dadurch gekennzeichnet, daß man die Wasserpflanzen am Entnahmeort mittels gemäß den Ansprüchen 1, 3, 4 und 5 definierten hydrophilen Festkörpern aus den Teichen, Becken oder Behältern entnimmt indem man die Festkörper in das Wasser eintaucht und mit einer Geschwindigkeit aus dem Wasser herausbewegt, bei der die Pflanzen einzeln an den Festkörpern haften bleiben.

9. Verfahren nach einem der Ansprüche 1 bis 7, dadurch gekennzeichnet, daß man die Wasserpflanzen am Entnahmeort mittels eines aus einer unterhalb der Wasseroberfläche angeordneten Düse ausgestossenen Wasserstrahls einzeln aus dem Teich, Becken oder Behälter befördert.

10. Verfahren nach einem der Ansprüche 1 bis 7, dadurch gekennzeichnet, daß man die Wasserpflanzen am Entnahmeort mittels einer unterhalb der Wasseroberfläche plazierten Saugvorrichtung einzeln aus dem Teich, Becken oder Behälter absaugt.

11. Verfahren nach einem der vorhergehenden Ansprüche, dadurch gekennzeichnet, daß man die entnommenen Wasserpflanzen nach Detektion mittels einer Lichtschranke und nachfolgende Überführung durch einen Luft- oder Wasserstrahl in Einzelbehälter isoliert.
